(19) Europäisches Patentamt
European Patent Office
Office européen des brevets

(11) **EP 1 319 959 B1**

(12) **EUROPÄISCHE PATENTSCHRIFT**

(45) Veröffentlichungstag und Bekanntmachung des Hinweises auf die Patenterteilung:
**13.01.2010 Patentblatt 2010/02**

(51) Int Cl.:
*G01S 5/12* (2006.01)     *H04W 64/00* (2009.01)

(21) Anmeldenummer: **02025889.3**

(22) Anmeldetag: **20.11.2002**

(54) **Verfahren zur nichtkooperativen Ortung von Teilnehmern in einem leistungsgeregelten Mobilfunksystem**

Method for non-cooperative position determination of subscribers in a power controlled mobile radio system

Procédé de localisation non-coopérative des abonnés dans un système de radio mobile de contrôle de puissance

(84) Benannte Vertragsstaaten:
**AT BE BG CH CY CZ DE DK EE ES FI FR GB GR IE IT LI LU MC NL PT SE SK TR**

(30) Priorität: **14.12.2001 DE 10161594**

(43) Veröffentlichungstag der Anmeldung:
**18.06.2003 Patentblatt 2003/25**

(73) Patentinhaber: **EADS Deutschland GmbH**
**85521 Ottobrunn (DE)**

(72) Erfinder:
• **Benz, Arnulf, Dr.**
**89275 Oberelchingen (DE)**
• **Prögler, Max**
**89155 Erbach (DE)**
• **Brakemeier, Achim, Dr.**
**89134 Blaustein (DE)**

(74) Vertreter: **Meel, Thomas**
**c/o Dornier GmbH**
**Patentabteilung**
**88039 Friedrichshafen (DE)**

(56) Entgegenhaltungen:
EP-A- 1 094 335     WO-A-00/50918
WO-A-95/14936     WO-A-98/15149
DE-A- 19 528 616     US-A- 5 208 756
US-A- 5 666 662

**Beschreibung**

Die vorliegende Erfindung betrifft ein Verfahren zur nichtkooperativen Ortung von Teilnehmermobilstationen in einem leistungsgeregelten Mobilfunksystem.

Nichtkooperativ bedeutet dabei, dass die Ortung ohne eigenen Systemzugang der Aufklärungsstation zum Mobilfunksystem erfolgt.

Moderne Mobilfunksysteme sind leistungsgeregelt, d.h die von den Teilnehmermobilstationen abgestrahlte Leistung ist einem strengen Sendeleistungsmanagement unterworfen. Sie wird so geregelt, dass die an der Basisstation empfangene Leistung einem vorgegebenen Empfangspegel entspricht. Die abgestrahlte Leistung der einzelnen Teilnehmer hängt somit von der Entfernung und den Ausbreitungsverhältnissen auf der Funkstrecke zwischen Teilnehmermobilstation und Basisstation ab. Die Empfangsleistung, die an einer beliebigen, nicht mit der Basisstation identischen Empfangsstelle empfangen wird, hängt somit von der relativen räumlichen Konstellation zwischen Emitter, Basisstation und Aufklärungsstation ab.

Bei nichtkooperativen Ortungsverfahren mittels Triangulation oder Laufzeitdifferenzmessung (Hyperbelortung) ist notwendige Voraussetzung für die Ortbarkeit eines Emitters, dass er von mehreren räumlich voneinander entfernten Peil-/Empfangssensoren empfangen werden kann. Somit bilden mehrere Empfangsstellen einen räumlich verteilten Ortungssensor. Die Flächen- bzw. Raumabdeckung eines solchen Ortungssensors entspricht der von den einzelnen Empfangsstellen gemeinsam eingesehenen Fläche bzw. dem gemeinsam eingesehenen Raumgebiet. Die von Aufklärungs- bzw. Ortungssystemen zu überwachenden Interessensgebiete sind in der Regel deutlich größer als die Ausdehnung einzelner Zellen in zellularen Funksystemen, während die Sendeleistungen der zu ortenden Teilnehmermobilstationen sich an den Zelldimensionen orientieren und durch eine Reihe technischer Maßnahmen möglichst gering gehalten werden. Die Verfügbarkeit einer Ortungsfunktionalität zur Abdeckung eines größeren räumlichen Interessensbereichs erfordert deshalb eine große Anzahl von räumlich verteilten Aufklärungsstationen.

In der DE 195 28 616 A1 ist ein Verfahren zur kooperativen Ortung von Mobilstationen beschrieben, das mit lediglich einer Aufklärungsstation, welche einen Peiler enthält, auskommt. Da mit einem Peiler allein noch keine vollständige Positionsbestimmung möglich ist, wird von der Aufklärungsstation zusätzlich der Funkverkehr zwischen Mobilstation und Basisstation des Mobilfunksystems abgehört (kooperative Ortung). Dabei wird insbesondere der sogenannte TA-Wert, der ein Bestandteil der GSM-Signalisierung ist, ermittelt und daraus sowie mit dem Ergebnis der Peilung die Position der Mobilstationen berechnet. Weitere Ortungsverfahren unter Rückgriff auf interne Parameter und Protokolle des Mobilfunksystems sind in der DE 197 14 743 C2 und der DE 43 21 418 A1 beschrieben.

Die DE 197 43 258 A1 beschreibt ein Verfahren zur Sicherstellung eines wechselseitigen Sprechverkehrs und zur Positionserkennung zwischen mobilen Funkstationen mit Navigationseinrichtungen. Die Positionserkennung der einzelnen Funkstationen erfolgt auf der Grundlage der von einer GPS-Antenne bereitgestellten Positionsinformation. Die Sicherung eines wechselseitigen Sprechverkehrs zwischen den einzelnen Funkstationen erfolgt durch eine elektrische Feldstärkeerfassungseinrichtung. Sobald eine der Funkstationen droht, aus dem Sendebereich der übrigen Funkstationen herauszutreten, d.h. die Feldstärke des empfangenen Signals unter eine vorbestimmte Schwelle fällt, wird eine Warnung erzeugt.

Der Erfindung liegt die Aufgabe zugrunde, ein Verfahren zu schaffen, mit dem neben einer deutlichen Reduktion der Zahl der benötigten Aufklärungsstationen eine Ortung der Teilnehmermobilstationen ohne eigenen Systemzugang der Aufklärungsstation ermöglicht wird. Die Aufklärungsstation soll also möglichst ohne Rückgriff auf interne Daten, Protokoll etc. des Mobilfunksystems arbeiten.

Diese Aufgabe wird mit dem Verfahren nach Patentanspruch 1 gelöst. Vorteilhafte Ausführungen der Erfindung sind Gegenstand weiterer Ansprüche.

Das Charakteristikum Leistungsregelung in den aufzuklärenden Mobilfunknetzen ermöglicht die erfindungsgemäße Ortsbestimmung mit nur einer Aufklärungsstation (Single Station Location). Die Regelung der Sendeleistung der Mobilteilnehmer ist ein wesentliches Merkmal fast aller modernen Mobilfunksysteme. Das Verfahren ist deshalb übergreifend anwendbar und muss lediglich in einigen Messparametern adaptiert werden.

Das erfindungsgemäße Verfahren beruht auf der gleichzeitigen Messung der Empfangsleistung und des Peilwinkels von Teilnehmermobilstationen. Für die Peilwinkelermittlung kann im einfachsten Fall eine Richtantenne mit möglichst geringer Hauptkeulenbreite eingesetzt werden. Komfortablere Ansätze setzen auf Antennenarrays mit Beamforming oder hochauflösender Algorithmik auf. Bei bekannter Lage der Basisstation und der Ausbreitungsdämpfung lässt sich aus dem an der Aufklärungsstation gemessenen Empfangspegel auf mögliche Positionen der sendenden Teilnehmermobilstation rückschließen. Die Ortsbestimmung erfolgt durch Schneiden des Peilstrahls mit der aus der Leistungsmessung ermittelten Ortskurve.

Die Bestimmung des Empfangspegels von Funksignalen gehört zu den Standardfunktionalitäten moderner Funkaufklärungssensoren. Beispielsweise liefern moderne Breitbandpeiler als Messwerte Pegel und Winkel über Zeit und Frequenz. Der gemessene Pegel ist proportional zur Empfangsfeldstärke am Ort der Aufklärungsstation. Der Proportionalitätsfaktor kann durch Eichung unter Berücksichtigung der genutzten Antennen bestimmt werden. Bei Funknetzen, die CDMA-Technologie nutzen, senden viele Mobilteilnehmer auf derselben Frequenz. An der Aufklärungsstation wird deshalb ein Signalgemisch empfangen. Die den einzelnen Mobilteilnehmern zuzuordnenden Anteile am Gesamtempfangspegel müssen durch raumselektive Filterung selektiert werden. Dies kann entweder durch Richtantennen oder durch die Nutzung hochauflösender Verfahren erfolgen (z.B. Krim and Viberg "Two Decades of Array Signal Processing Research". IEEE Signal Processing Magazine, July 1996, p. 67-94).

Das erfindungsgemäße Verfahren ist um so genauer, je strenger die Leistungsregelung im aufzuklärenden Mobilfunknetz ist und je genauer die Ausbreitungsbedingungen der elektromagnetischen Strahlung innerhalb des Aufklärungsgebiets bekannt sind. Hierzu können Messverfahren zum Aufbau einer entsprechenden Geländedatenbank ausgearbeitet werden.

Eine Aufklärungsstation zum Einsatz in dem erfindungsgemäßen Verfahren umfasst somit als wesentliche Komponenten:

- Peileinrichtung,
- Aufklärungssensor zur Empfangspegelmessung,
- Rechner zur Auswertung der gewonnenen Messwerte und zur Ortsbestimmung der Teilnehmermobilstation,
- Datenbank mit Informationen zu den Positionen der Basisstationen, zum Sollempfangspegel an den Basisstationen sowie zur lokalen Ausbreitungsdämpfung elektromagnetischer Strahlung.

Anstatt lokaler Datenbanken an jeder Aufklärungsstation, die die für die jeweilige Umgebung spezifischen Daten enthalten, ist es auch möglich, nur eine zentrale Datenbank bereitzustellen, auf die die einzelnen Aufklärungsstationen zugreifen können.

Die benötigten Informationen zur Position der Basisstationen sowie zum Sollempfangspegel an den Basisstationen sind in der Regel frei verfügbar - sie betreffen also keine internen Daten eines Mobilfunksystems.

Aufgrund der Tatsache, dass in die Ortungsberechnung nur Ergebnisse von gleichzeitig durchgeführten Messungen einer einzigen Station einfließen, ist bei diesem Verfahren a priori sichergestellt, dass in die Ortsberechnung nur Daten einund desselben Emitters eingehen. Einzige Ausnahme hierzu ist der Fall, dass - von der Aufklärungsstation aus gesehen - Signale von mehreren Teilnehmermobilstationen aus der gleichen Richtung empfangen werden. Hier kann die Entfernungsbestimmung durch Leistungsmessung verfälscht werden. Diese Fälle werden in der Praxis allerdings selten sein. Durch eine zusätzliche Analyse der demodulierten HF-Trägerdaten (Chips) des an der Aufklärungsstation empfangenen Signals kann ermittelt werden, ob ein solcher Fall vorliegt. Die Signale können dann separiert werden und es können die auf die einzelnen Mobilstationen entfallenden Teilleistungen ermittelt werden.

Der Vorteil des erfindungsgemäßen Verfahrens besteht nicht nur in einer Reduktion der erforderlichen Aufklärungsstationen, sondern auch in geringerer Aufklärbarkeit und in geringerer Verwundbarkeit gegenüber ECM: Ein Ortungssensor mit mehreren räumlich verteilten mobilen Aufklärungsstationen und zentraler Ortungsrechnung ist notwendig auf ein leistungsstarkes Funknetz zwischen den Stationen angewiesen. Demgegenüber ermöglicht das erfindungsgemäße Verfahren einen autarken Betrieb. Es erfolgen keine aufklärbaren Funkabstrahlungen durch Datenübertragung zur zentralen Ortungsberechnung.

Das erfindungsgemäße Verfahren ist darüber hinaus geeignet zur Ortung von CDMA-Emissionen (starker Mehrwelleneinfall verursacht durch andere Teilnehmer).

Die Erfindung wird anhand eines Ausführungsbeispiels unter Bezugnahme auf Figuren näher erläutert. Es zeigen:

Fig. 1: Beispiele für Dämpfungsgeraden für $f$ = 1000 MHz,

Fig. 2: Szenario zur Ortsbestimmung gemäß der Erfindung mittels nur einer Aufklärungsstation,

Fig. 3 asynchron demodulierter Phasenstern bei der Analyse der demodulierten HF- Trägerdaten des an der Aufklärungsstation empfangenen Signals,

Fig. 4 Darstellung des Summensignals bei der Analyse der demodulierten HF- Trägerdaten beim gleichzeitigen Empfang von Signalen zweier Teilnehmermobilstationen.

Ein wesentliches Merkmal fast aller Zellenfunksysteme ist eine Regelung der Sendeleistung der Teilnehmermobilstation in einem geschlossenen Regelkreis. Für DS-CDMA-Systeme ist sie unabdingbar, und für TDMA-Systeme bewirkt sie eine Kapazitätsverbesserung. Die Sendeleistung der Teilnehmermobilstation wird so eingestellt, dass eine genau definierte Übertragungsqualität erreicht wird: nicht zu schlecht aber auch nicht zu gut! Daraus folgt, dass die Empfangspegel aller Teilnehmermobilstationen an der Basisstation in etwa gleich sind. Wenn dieser Sollpegel sowie die Ausbreitungsdämpfung bekannt sind, lassen sich aus dem von der Aufklärungsstation gemessenen Empfangspegel Rückschlüsse auf mögliche Positionen der sendenden Teilnehmermobilstation ziehen.

Die Ausbreitungsdämpfung D lässt sich in sehr guter Näherung darstellen mit

$$\text{Gl. 1} \qquad D = A \cdot f^{b} \cdot d^{c}$$

oder in logarithmischer Darstellung in dB:

$$\text{Gl. 2} \qquad D[dB] = 10\log A + 10b\log f + 10c\log d \, .$$

Der erste Term hängt nur von der Umgebung ab, der zweite von der Frequenz (in MHz) und der dritte von der Entfernung (in km), die drei Konstanten, A, b und c, sind von der Umgebung, dem "Szenario" S, abhängig. Die folgende Tabelle 1 enthält beispielhaft die Parameter für die drei Umgebungsszenarien "Freiraum", Stadt" und "Fußgängerzone".

Tabelle 1: Parameter für die Ausbreitungsdämpfung

| Szenario | log A | b | c |
|---|---|---|---|
| Freiraum | 3,24 | 2,00 | 2,00 |
| Stadt | 4,95 | 2,56 | 3,52 |
| Fußgänger | 4,90 | 3,00 | 4,00 |

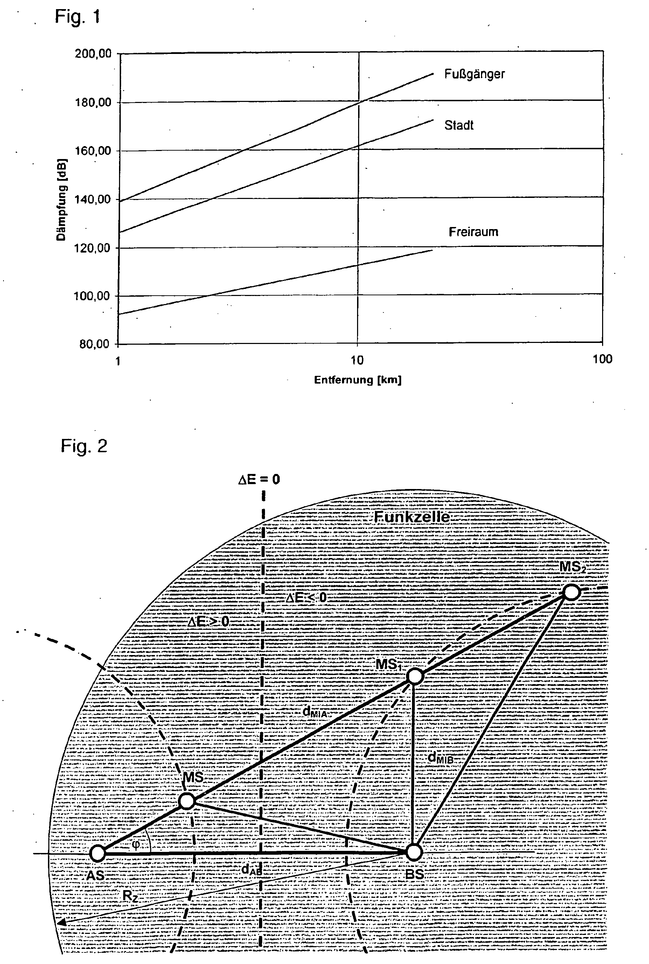

In der logarithmischen Darstellung ist D = F(S, $f$, d) eine Gerade mit der Steigung m = 10c, wie Fig. 1 zeigt.
Die Empfangsleistung $E_B$ an der Basisstation BS (siehe Fig. 2) erfordert an der Mobilstation MS die Sendeleistung $S_M$, wenn der Abstand $d_{MB}$ beträgt. Die Aufklärungsstation AS stellt dann, wenn ihr Abstand zur Mobilstation MS $d_{MA}$ beträgt, die Empfangsleistung $E_A$ fest. Damit gilt:

$$\text{Gl. 3} \qquad E_B = \frac{S_M}{D_{MB}}$$

$$\text{Gl. 4} \qquad E_A = \frac{S_M}{D_{MA}}$$

$$\text{Gl. 5} \qquad \frac{E_A}{E_B} = \frac{D_{MB}}{D_{MA}} = \frac{A \cdot f^{b} \cdot d_{MB}^{c}}{A \cdot f^{b} \cdot d_{MA}^{c}} = \left(\frac{d_{MB}}{d_{MA}}\right)^{c} .$$

Das Verhältnis der beiden Empfangsleistungen hängt nur von den entfernungsbestimmten Termen ab. Es genügt somit, die Konstante $c$, also die Steigung der Dämpfungsgeraden, zu kennen. Diese kann relativ einfach durch Messung ermittelt werden.
Misst man z. B. die Empfangsleistung der Basisstation BS - bei konstanter Sendeleistung - für zwei verschiedene Entfernungen, also $E_1(d_1)$ und $E_2(d_2)$, beide in dBm, dann ergibt sich für c (es wird gleich 10c bestimmt, da dieser Wert im Folgenden verwendet wird):

$$\text{Gl. 6} \qquad 10c = \frac{E_1 - E_2}{\log(d_2) - \log(d_1)} .$$

Mit der Kenntnis von $E_A/E_B$ sowie c lassen sich mögliche Aufenthaltsorte für die Mobilstation MS angeben. Der geometrische Ort für ein bestimmtes Verhältnis $V_E = E_A/E_B$ ist ein Kreis mit dem Radius $R_E$ dessen Mittelpunkt $M_E$

auf der Geraden liegt, die durch die Positionen der Aufklärungsstation AS und der Basisstation BS bestimmt ist. Für $V_E$ = 1 entartet der Kreis in die Mittelsenkrechte ($R_E$, $M_E = \infty$), für $V_E > 1$ liegen die Mittelpunkte links davon und für $V_E < 1$ rechts (siehe Fig. 2).

Für $R_E$ und $M_E$ gilt als Funktion von $d_{AB}$, $V_E$, $c$ sowie der Entfernung zwischen Aufklärungsstation AS und Teilnehmermobilstation MS:

$$\text{Gl. 7} \qquad R_E = d_{AB} \frac{V_E^{1/c}}{\left|1 - V_E^{2/c}\right|} = d_{AB} \frac{10^{\Delta E/10c}}{1 - 10^{2\Delta E/10c}} \quad \text{für } \Delta E[\text{dB}] = E_A[\text{dBm}] - E_B[\text{dBm}].$$

$$\text{Gl. 8} \qquad M_E = d_{AB} \frac{1}{1 - V_E^{2/c}} = d_{AB} \frac{1}{1 - 10^{2\Delta E/10c}}.$$

Die Position der Aufklärungsstation AS stellt bezüglich $M_E$ den Nullpunkt dar, positive Werte liegen rechts, negative links.

Lässt sich einer Empfangsleistung durch Durchführung einer gleichzeitigen Peilung noch ein bestimmter Winkel $\varphi$ zuordnen, dann muss die Position der Teilnehmermobilstation MS auf den Schnittpunkten der Winkelgeraden mit dem entsprechenden Kreis liegen. Abhängig von $V_E$ ergeben sich folgende Positionen der Mobilstation MS.

$$\text{Gl. 9} \qquad d_{MA} = d_{AB} \frac{-\cos\varphi + \sqrt{\cos^2\varphi - 1 + 10^{2\Delta E/10c}}}{10^{2\Delta E/10c} - 1} \quad \text{für } V_E > 1$$

$$\text{Gl. 10} \qquad d_{MA} = d_{AB} \frac{1}{2\cos\varphi} \quad \text{für } V_E = 1.$$

Für $V_E < 1$ ist die Position nicht eindeutig zu bestimmen, da es zwei mögliche Werte für die Entfernung gibt:

$$\text{Gl. 11} \qquad d_{MA1} = d_{AB} \frac{-\cos\varphi + \sqrt{\cos^2\varphi - 1 + 10^{2\Delta E/10c}}}{10^{2\Delta E/10c} - 1}$$

und

$$\text{Gl. 12} \qquad d_{MA2} = d_{AB} \frac{-\cos\varphi - \sqrt{\cos^2\varphi - 1 + 10^{2\Delta E/10c}}}{10^{2\Delta E/10c} - 1}.$$

Der zweite Wert, die größere Entfernung, kann allerdings dann ausgeschieden werden, wenn er zu einer Position außerhalb der Funkzelle führt. Dies ist dann der Fall, wenn die Distanz $d_{MB}$ größer als der Funkzellenradius $R_Z$ ist, also wenn gilt:

$$\text{Gl. 13} \qquad d_{MB} = \sqrt{d_{MA}^2 + d_{AB}^2 - 2d_{MA}d_{AB}\cos\varphi} > R_Z.$$

Das Charakteristikum Leistungsregelung ermöglicht somit eine Ortsbestimmung mit nur einer Aufklärungsstation. Die dafür notwendigen Voraussetzungen sind:

- Nur eine aktive Teilnehmermobilstation MS wird empfangen.

- Genügend genaue Richtantenne (oder sonstiges Antennensystem) für die Peilung.

- Genügend genaue Leistungsmessung.

- Kenntnis des Ausbreitungskoeffizienten c

- Position der Basisstation BS und daraus abgeleitet die Entfernung AS-BS.

- Gleiche Ausbreitungsbedingungen für die Strecken MS-BS und MS-AS.

- Kenntnis der Sollempfangsleistung bei der Basisstation BS.

- Kenntnis der maximal möglichen Entfernung MS-BS, um unzulässige Positionen der Mobilstation MS auszusortieren.

Die Genauigkeit des Verfahrens hängt im Wesentlichen von der Genauigkeit der Leistungsregelung in der Teilnehmermobilstation ab. Für cdmaOne beträgt die Abweichung vom Sollwert $E_B$ z.B. 1 dB, für zukünftige Systeme ist 0,25 dB vorgesehen.

Der Fehler liegt bei einer Regelgenauigkeit von 1 dB für $E_B$ im Bereich $\Delta E < 1$ ($\Delta E$ [dB] = $E_A$ [dBm] - $E_B$ [dBm]) unter 5 % und für den Bereich $\Delta E > 1$ steigt er auf 11%. Der Bereich $\Delta E \approx 1$ liefert für $\varphi > 30$ recht ungenaue Ergebnisse. Das liegt daran, dass sich hier die möglichen Positionen der Teilnehmermobilstation auf der Mittelsenkrechten bzw. Kreisen mit sehr großem Durchmesser bewegt. Anhand der erlaubten Maximalentfernung können allerdings die meisten dieser Lösungen als unzulässig ausgeschieden werden. Bei einer Regelgenauigkeit von 1/4 dB reduziert sich der Fehler auf unter 1,5 bzw. 3 %.

Eine Voraussetzung des bisher beschriebenen Verfahrens ist, dass nur das Signal einer Teilnehmermobilstation aus einer Richtung empfangen wird. Wie im weiteren ausführlich beschrieben werden wird, kann dies durch eine Analyse der demodulierten "HF-Träger-Daten", den Chips, überprüft werden.

Die Chipfolge ist aus den Nutzdaten durch eine Walsh-Kodierung und anschließende Spreizung mit einer langen PN-Sequenz sowie einem parallelen "Scrambling" mit zwei kurzen PN-Folgen erzeugt worden. In dieser Chipfolge treten 0 und 1 bzw. +1 und -1 praktisch statistisch unabhängig mit der Wahrscheinlichkeit $p = p(0) = p(1) = 0,5$ auf. Der HF-Träger einer Mobilstation hat die konstante Amplitude $A$, und die Phase kann sich nach jeweils einer halben Chipdauer um $\pm 90°$ ändern; es sind vier Winkel möglich, wobei die Differenz $90°$ beträgt.

Überlagern sich dagegen die HF-Signale zweier Mobilstationen, dann sind vier Amplituden möglich und insgesamt 16 Phasen, deren Differenz beliebig sein kann. Wenn die zweite Mobilstation höchstens mit der halben Leistung empfangen wird wie die erste, dann können die beiden Signale separiert werden. Man kann die beiden Teilleistungen ermitteln und sogar die beiden Chipfolgen zurückgewinnen.

Dieses Verfahren lässt sich grundsätzlich auch bei drei (und mehr) gleichzeitig empfangenen Teilnehmermobilstationen sukzessive anwenden. Allgemein muss bei insgesamt m Stationen, $MS_1$, $MS_2$, ...$MS_m$, gelten:

$$\text{Gl. 14} \qquad E_A = \sum_{i=1}^{m} E_{Ai}; \quad E_{Ai+1} > 2E_{Ai}; \quad E_{A1} < 3^{1-m} E_A.$$

Es ist also prinzipiell möglich, aus dem Summensignal die "HF-Daten" der beteiligten - aus Sicht der Aufklärungsstation hintereinanderliegenden - Mobilstationen $MS_1$ bis und $MS_m$ zu gewinnen, wenn die Leistungen die Bedingungen von Gl. 14 erfüllen. In der Praxis wird das allerdings durch Rauschen und sonstige Übertragungsstörungen auf sehr wenige Stationen (m = 2 oder 3) beschränkt sein.

Dazu ein Beispiel für m = 3, also zwei zusätzlichen Mobilstationen. Damit die Bedingungen von Gl. 14 erfüllt sind, muss z. B. der Empfangspegel von $MS_2$ um 5 dB und der von $MS_3$ um 8 dB niedriger sein als der von $MS_1$. Damit

erhöht sich der Summenpegel für die Aufklärungsstation AS um 1,7 dB.

Die vorstehend genannten Zusammenhänge zur Signalanalyse der demodulierten HF-Trägerdaten werden im Folgenden anhand eines Beispiels auf der Basis des Modulationsverfahrens OQPSK näher erläutert.

Der erste Schritt einer Signalanalyse "von oben her kommend" besteht darin, die durch das Scrambling mit den beiden kurzen PN-Folgen, $PN_I$ und $PN_Q$, erzeugten Chipfolgen als "Daten" $d_I$ und $d_Q$ zu interpretieren. Diese Daten bestehen aus Walsh-Kodeworten (64 Chips), die zuerst mit der langen PN-Folge (L = $2^{42}$ - 1 $\approx 4 \cdot 10^{12}$) um den Faktor 4 gespreizt werden, um anschließend mit den beiden kurzen Folgen (L = $2^{15} \approx 3 \cdot 10^4$) multipliziert zu werden. Da sowohl die Walsh-Kodeworte (bis auf eines) als auch die PN-Folgen "0" und "1" bzw. "+1" und "-1" gleich häufig enthalten, enthält die resultierende Datenfolge diese ebenfalls gleichverteilt, unabhängig von den Nutzdaten. IS-95 verwendet in der Mobilstation OQPSK zur Modulation des HF-Trägers mit der Frequenz $f_T$. Das Trägersignal besteht aus zwei Komponenten

$$\text{Gl. 15} \qquad S_I(t) = \pm s_I \cos(2\pi f_T t)$$

$$\text{Gl. 16} \qquad S_Q(t) = \pm s_Q \sin(2\pi f_T t).$$

Die Datensymbole $s_I$ sind die den Chips äquivalenten Impulse mit der Dauer $T_C$ und der Frequenz $f_C = 1/T_C$ (= 1,2288 MHz). Diese beiden Signale werden, um $T_C/2$ versetzt, mit einem Diplexer zu einem Summensignal $S(t)$ zusammengefügt. Dieses hat die Form

$$\text{Gl. 17} \qquad S(t) = s \cdot \cos(360° \cdot f_T \cdot t + 45° + i \cdot 90°); \; i = 0, 1, 2, 3;$$

Das Charakteristische für dieses Modulationsverfahren ist, dass die Amplitude konstant ist und die Phasen 45˚, 135˚, 225˚ und 315˚ betragen können. Die Phasenänderungen jedoch erfolgen nach jeweils einer halben Symboldauer, also der doppelten Symbolfrequenz, und diese können für aufeinanderfolgende Symbole nur 0 oder $\pm$ 90˚ betragen. Im Unterschied zu QPSK wird damit ein 180˚-Phasensprung nicht hart in einem Schritt ausgeführt, sondern weich nacheinander in zwei 90˚-Schritten. Man bezeichnet dies auch als serielle Modulation. $s_I$ und $s_Q$ sind die Symbole der beiden kurzen PN-Folgen, $PN_I$ und $PN_Q$, denen die gleichen Datensymbole überlagert sind.

Im Empfänger kann das HF-Signal durch Mischen mit der Trägerfrequenz wieder demoduliert werden. Die Multiplikation mit $\cos(2\pi f_T t)$ und $\sin(2\pi f_T t)$ sowie Tiefpassfilterung liefert

$$\text{Gl. 18} \qquad D_I(t) = \cos(\phi + 45° + i \cdot 90°) \text{ und}$$

$$\text{Gl. 19} \qquad D_Q(t) = -\sin(\phi + 45° + i \cdot 90°) \text{ für } i = 0, 1, 2, 3;$$

Da keinerlei Synchronisation vorhanden ist, kann eine beliebige Phasenverschiebung um den Winkel $\phi$ auftreten. Nimmt man nur die Vorzeichen, dann ergeben sich für $0 \leq \phi + 45° < 90°$ die in der folgenden Tabelle 2 dargestellten Werte.

*Tabelle 2:*
*Demodulationstabelle*

| $i$ | $d_I$ | $-d_Q$ |
|---|---|---|
| 0 | >0 | ≥0 |
| 1 | ≤0 | >0 |
| 2 | <0 | ≤0 |
| 3 | ≥0 | <0 |

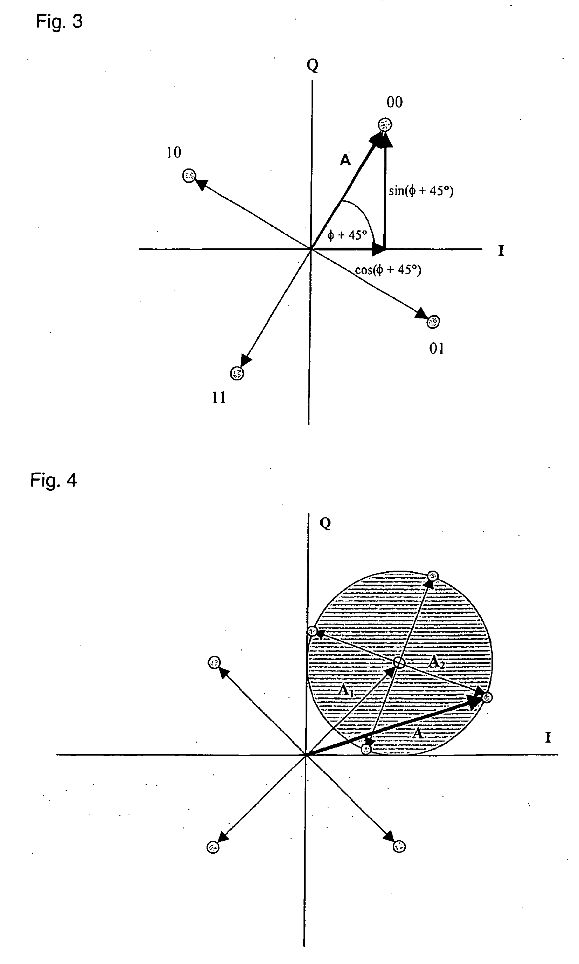

Jedem $i$ lässt sich also ein Datenchippaar, z. B. 00, 01, 11, 10, zuordnen (Fig. 3). Diese Zuordnung ist jedoch nicht eindeutig. Um exakt die Sendefolge wieder zu erhalten, muss eine entsprechende Trägersynchronisation durchgeführt werden.

Für andere Werte von $\phi$ + 45˚, also z. B. 90˚ $\leq$ $\phi$ + 45˚ < 180˚, sind die Zeilen entsprechend zyklisch zu vertauschen, also z. B. um eine Zeile nach oben. Diese beiden Datenfolgen sind wieder um eine halbe Symboldauer gegeneinander verschoben.

Das Empfangssignal von nur einer Mobilstation ist also gekennzeichnet durch

- ; konstante Amplitude $A$,
- ; Phasensprünge um 0˚, +90˚ oder -90˚ im Abstand $T_C/2$,
- ;ca. $i$ Phasensprünge im Intervall von $i$ Chips für $i > 2^{15} \approx 33000$.

Bei gleichzeitigem Empfang von zwei Mobilstationen, wenn sich also die Trägerschwingungen überlagern, ergibt sich eine Konfiguration entsprechend Fig. 4.

Für die resultierende Amplitude A und den Phasenwinkel $\phi$ ergibt sich dann für $A_2 = \nu A_1$, $0 \leq \nu < 1$, und abhängig von den Phasenwinkeln $\varphi_1$ und $\varphi_2$, $0˚ \leq \varphi_{1,2} \leq 360˚$, sowie den Datenwinkeln $i_1$ und $i_2$, $i = 0, 1, 2, 3$:

$$\text{Gl. 20} \qquad A = A_1 \sqrt{1 + \nu^2 + 2\nu \cos(\varphi_2 - \varphi_1 + (i_2 - i_1)90°)}$$

$$\text{Gl. 21} \qquad \phi = \arctan \frac{\sin(\varphi_1 + i_1 90°) + \nu \sin(\varphi_2 + i_2 90°)}{\cos(\varphi_1 + i_1 90°) + \nu \cos(\varphi_2 + i_2 90°)} .$$

Eine einfachere Darstellung ergibt sich für $\varphi_1 = 0$ und $i_1 = 0$, d. h. $A_1$ liegt auf der positiven Q-Achse.

$$\text{Gl. 22} \qquad A = A_1 \sqrt{1 + \nu^2 + 2\nu \cos(\varphi_2 + i_2 90°)}$$

$$\text{Gl. 23} \qquad \phi = \arctan \frac{\nu \sin(\varphi_2 + i_2 90°)}{1 + \nu \cos(\varphi_2 + i_2 90°)} .$$

Der Summenvektor $\vec{A}(t)$ kann also 4 verschiedene Längen sowie insgesamt 16 Richtungen haben. Die Endpunkte von $\vec{A}$ liegen auf einem Kreis mit dem Radius $A_2$, dessen Mittelpunkte die vier Endpunkte von $\vec{A}_1$ sind. Eine eindeutige Zuordnung ist möglich für $A_2 < A_1/\sqrt{2}$. Der Empfangspegel von MS$_2$ muss also kleiner als die Hälfte des Pegels von MS$_1$ sein.

Bei stationären Empfangsverhältnissen lässt sich aus dem Summenvektor $\vec{A}(t)$ sowohl der Mittelpunkt als auch der Radius des Kreises bestimmen und damit auch die beiden Amplituden $A_1$ und $A_2$ bzw. die Leistungsanteile von MS$_1$ und MS$_2$ im Summensignal. In der Praxis liegen die Endpunkte von $\vec{A}$ zwar nicht auf einem Kreis, sondern auf einer Art Kreisring, aber dies ermöglicht trotzdem die Bestimmung des Mittelpunktes durch vektorielle Mittelung über alle $\vec{A}(t)$. Der Einfluss von $\vec{A}$ kann durch Subtraktion eliminiert werden, so dass aus $\vec{A}_2(t)$ die HF-Daten von MS$_2$ gewonnen werden können.

## Abkürzungen und Akronyme

| | |
|---|---|
| AS | Aufklärungsstation |
| BS | Basisstation |
| CDMA | Code Division Multiple Access |
| dBm | Leistung in dB bezogen auf 1 mW |

| | |
|---|---|
| DS-CDMA | Direct Sequence CDMA |
| ECM | Electronic Counter Measure |
| HF | Hochfrequenz |
| IS | Interim Standard |
| MS | Mobilstation |
| OQPSK | Offset QPSK |
| PN | Pseudo-Noise |
| QPSK | Quaternary Phase Shift Keying |
| TDMA | Time Division Multiple Access |

**Patentansprüche**

1. Verfahren zur nichtkooperativen Ortung einer Teilnehmermobilstation (MS) in einem leistungsgeregelten Mobilfunksystem, bei dem die von der Teilnehmermobilstation (MS) abgestrahlte Leistung derart geregelt wird, dass die an einer Basisstation (BS) des Mobilfunksystems empfangbare Leistung des von der Teilnehmermobilstation (MS) emittierten Signals einem vorgegebenen festen Empfangssollpegel entspricht, **gekennzeichnet durch** folgende Verfahrensschritte:

   a) es wird eine Datenbank bereitgestellt, in der folgende Informationen gespeichert sind:

   - Position der Basisstation (BS) der zu ortenden Teilnehmermobilstation (MS);
   - Sollempfangspegel der an einer Basisstation (BS) empfangbaren Leistung;
   - Informationen zur Ermittlung der lokalen Ausbreitungsdämpfung der elektromagnetischen Strahlung;

   b) mittels genau einer Aufklärungsstation (AS) erfolgt die gleichzeitige Messung des Peilwinkels der Teilnehmermobilstation (MS) und der an der Aufklärungsstation (AS) empfangbaren Leistung des von der Teilnehmermobilstation (MS) emittierten Signals,
   c) in der Aufklärungsstation (AS) erfolgt eine Berechnung der Ortskurve mit möglichen Positionen der Teilnehmermobilstation (MS) aufgrund der gemessenen Empfangsleistung sowie unter Rückgriff auf die in der Datenbank gespeicherten Informationen,
   d) in der Aufklärungsstation erfolgt eine Ortsbestimmung der Teilnehmermobilstation (MS) **durch** Schneiden des aus Peilung ermittelten Peilstrahls mit der berechneten Ortskurve möglicher Positionen der Teilnehmermobilstation (MS).

2. Verfahren nach Anspruch 1, **dadurch gekennzeichnet, dass** zur Verifikation der Ortsbestimmung der Abstand einer ermittelten Position der Mobilstation (MS) von der Basisstation (BS) berechnet wird, und eine ermittelte Position dann verworfen wird, wenn dieser Abstand größer als der Radius der betreffenden Funkzelle ist, wobei die Radien der Funkzellen des Mobilfunknetzes ebenfalls in der Datenbank bereitgestellt werden.

3. Verfahren nach Anspruch 1 oder 2, **gekennzeichnet durch** folgende Verfahrensschritte, die nach den Schritten a), b) durchgeführt werden:

   • Analyse der demodulierten HF-Trägerdaten des an der Aufklärungsstation (AS) empfangenen Signals zur Ermittlung, ob das Signal einer einzelnen Teilnehmermobilstation (MS) oder gleichzeitig die Signale mehrerer Teilnehmermobilstationen aus derselben Richtung empfangen werden,
   • und im Falle, dass mehrere Teilnehmermobilstationen aus derselben Richtung gleichzeitig empfangen werden:

   - Ermittlung der auf die einzelnen Teilnehmermobilstationen entfallenden Teilleistungen, und
   - Durchführung der Schritte c) und d) für jedes der gleichzeitig empfangenen Signale der Teilnehmermobilstationen (MS).

**Claims**

1. Method for non-cooperative location of a subscriber mobile station (MS) in a power-regulated mobile radio system, in which the power transmitted by the subscriber mobile station (MS) is regulated such that the power which can be received at a base station (BS) of the mobile radio system from the signal emitted by the subscriber mobile station (MS) corresponds to a predetermined fixed nominal reception level, **characterized by** the following method steps:

a) a database is produced in which the following information is stored:

- position of the base station (BS) of the subscriber mobile station (MS) to be located;
- nominal reception level of the power which can be received at a base station (BS);
- information for determination of the local propagation attenuation of the electromagnetic radiation;

b) the bearing angle of the subscriber mobile station (MS) and the power which can be received at the surveillance station (AS) from the signal emitted by the subscriber mobile station (MS) are measured at the same time by one and only one surveillance station (AS),
c) the locus curve with possible positions of the subscriber mobile station (MS) is calculated in the surveillance station (AS) on the basis of the measured received power and access to the information stored in the database,
d) the position of the subscriber mobile station (MS) is determined in the surveillance station by the intersection of the bearing ray emitted from the bearing with the calculated locus curve of possible positions of the subscriber mobile station (MS).

2. Method according to Claim 1, **characterized in that** the distance between a determined position of the mobile station (MS) and the base station (BS) is calculated in order to verify the location determination, and a determined position is rejected if this distance is greater than the radius of the relevant radio cell, with the radii of the radio cells in the mobile radio network likewise being provided in the database.

3. Method according to Claim 1 or 2, **characterized by** the following method steps carried out after steps a), b) :

• analysis of the demodulated RF carrier data of the signal received at the surveillance station (AS) in order to determine whether the signal from a single subscriber mobile station (MS) is being received, or the signals from a plurality of subscriber mobile stations are being received from the same direction at the same time,
• and in the situation in which a plurality of subscriber mobile stations are being received from the same direction at the same time:

- determination of the power elements resulting from the individual subscriber mobile stations, and
- carrying out steps c) and d) for each of the simultaneously received signals from the subscriber mobile stations (MS).

**Revendications**

1. Procédé de localisation non coopérative d'une station mobile d'abonné (MS) dans un système de radiocommunication mobile à puissance régulée, selon lequel la puissance rayonnée par la station mobile d'abonné (MS) est régulée de telle sorte que la puissance du signal émis par la station mobile d'abonné (MS) qui peut être reçue au niveau d'une station de base (BS) du système de radiocommunication mobile correspond à un niveau de réception voulu donné, **caractérisé par** les étapes suivantes :

a) Mise à disposition d'une base de données dans laquelle sont enregistrées les informations suivantes :

- Position de la station de base (BS) de la station mobile d'abonné (MS) à localiser ;
- Niveau de réception voulu de la puissance qui peut être reçue au niveau d'une station de base (BS) ;
- Informations de détermination de l'affaiblissement de propagation local du rayonnement électromagnétique ;

b) Mesure simultanée, au moyen d'exactement une station d'interception (AS), de l'angle de relèvement de la station mobile d'abonné (MS) et de la puissance du signal émis par la station mobile d'abonné (MS) qui peut être reçue au niveau de la station d'interception (AS),
c) Calcul, dans la station d'interception (AS), de la courbe de localisation avec les positions possibles de la station mobile d'abonné (MS) en se basant sur la puissance reçue mesurée et aussi en accédant aux informations enregistrées dans la base de données,
d) Détermination de l'emplacement, dans la station d'interception, de la station mobile d'abonné (MS) par intersection entre le rayon de relèvement déterminé par le relèvement et la courbe de localisation calculée des positions possibles de la station mobile d'abonné (MS).

2.  Procédé selon la revendication 1, **caractérisé en ce que** la vérification de la détermination de l'emplacement s'effectue en calculant la distance entre une position déterminée de la station mobile (MS) et la station de base (BS) et une position déterminée est alors rejetée lorsque cette distance est supérieure au rayon de la cellule radio concernée, les rayons des cellules radio du réseau de radiocommunication mobile étant également fournis dans la base de données.

3.  Procédé selon la revendication 1 ou 2,
    **caractérisé par** les étapes suivantes qui sont exécutées après les étapes a), b) :

    * Analyse des données de la porteuse HF démodulée du signal reçu au niveau de la station d'interception (AS) pour déterminer si le signal reçu est celui d'une seule station mobile d'abonné (MS) ou s'il s'agit des signaux de plusieurs stations mobiles d'abonné reçus simultanément depuis la même direction,
    * et dans le cas de la réception simultanée de plusieurs stations mobiles d'abonné depuis la même direction :

        - Détermination des puissances partielles à imputer à chacune des stations mobiles d'abonné et
        - Exécution des étapes c) et d) pour chaque signal reçu simultanément des stations mobiles d'abonné (MS).

## Fig. 1

## Fig. 2

Fig. 3

Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 19528616 A1
- DE 19714743 C2
- DE 4321418 A1
- DE 19743258 A1

### In der Beschreibung aufgeführte Nicht-Patentliteratur

- **Krim ; Viberg.** Two Decades of Array Signal Processing Research. *IEEE Signal Processing Magazine,* Juli 1996, 67-94